# EUROPÄISCHE PATENTSCHRIFT

(11) **EP 2 195 242 B1**
(45) Veröffentlichungstag und Bekanntmachung des Hinweises auf die Patenterteilung: **28.03.2012**
(21) Anmeldenummer: 08837787.4
(22) Anmeldetag: 06.10.2008
(51) Int. Cl.: B64F 1/36, G01V 5/00, B25J 9/00, B25J 19/00, B64F 1/32

(54) **VORRICHTUNG UND VERFAHREN ZUM DETEKTIEREN UND NEUTRALISIEREN VON GEFÄHRLICHEN GÜTERN**
DEVICE AND METHOD FOR DETECTING AND NEUTRALIZING HAZARDOUS GOODS
DISPOSITIF ET PROCEDE DE DETECTION ET DE NEUTRALISATION DE MARCHANDISES DANGEREUSES

(30) Priorität: 12.10.2007 DE 102007048968
(43) Veröffentlichungstag der Anmeldung: 16.06.2010
(73) Patentinhaber: Grenzebach Maschinenbau GmbH, 86663 Asbach-Bäumenheim (DE)
(72) Erfinder: BAIER, Gunar, 68219 Mannheim (DE)
(74) Vertreter: Kindermann, Peter
(86) Internationale Anmeldenummer: PCT/DE2008/001651
(87) Internationale Veröffentlichungsnummer: WO 2009/046703

(56) Entgegenhaltungen:
- WO-A1-2005/059594
- DE-A1- 10 125 531
- DE-A1- 10 139 672
- DE-A1-102005 002 756
- DE-U1-202007 014 339
- GR-B- 1 003 895

## Beschreibung

Seit den Anschlägen vom 11. September 2001 ist der gesamte Sicherheits - Apparat im Luftverkehr darauf trainiert zu verhindern, dass Sprengstoffe ,Waffen oder waffenähnliche Gegenstände an Bord gelangen. Dennoch gibt es nach Informationen der Pilotenvereinigung Cockpit sogar eine Verschärfung der Gepäck - Problematik. So gebe es bei Geschäftsreisenden einen regelrechten Trend zum Gefahrgut - Transport. Da gibt es zum einen Wissenschaftler, die mit toxikologischen Proben im Gepäck zu einem Kongress fliegen, zum anderen Marketing - Leute, die mit 400 Gasfeuerzeugen zur Messe reisen oder Monteure und Anlagenspezialisten, die mit gefährlichem Spezialwerkzeug auf dem Weg zur Reparatur beim Kunden sind.
Zwei besonders schwere Flugzeugunglücke sind bisher auf gefährliche Güter an Bord zurückzuführen. Der Absturz einer DC - 9 der US - Billiglinie ValuJet im Mai 1996 (110 Tote) sowie das Feuer auf einem Pilgerflug in einer Lockheed TriStar in Saudi Arabien 1980 ( 301 Tote ). Nach Ansicht von Fachleuten können solche Unfälle jederzeit wieder passieren vor allem bei so genannten Hadj - Pilgerflügen, bei denen als Handgepäck an Bord mitgebrachte Gasöfen nach wie vor Standard sind.
Bei dem Bordgepäck liegt der Schwerpunkt auf der Detektion von Waffen oder waffenähnlichen Gegenständen bzw. auf Stoffen und Dingen, die bei Nutzung durch einen Passagier ein Gefahrenpotenzial darstellen. Bei den im Flugzeugrumpf mitgeführten Gepäckstücken steht die Detektion explosiver Stoffe, die. z.B. durch Zeitzünder oder Fernzündung gezündet werden könnten, im Vordergrund. Wichtig ist auch die Erkennung der für die Zündung der explosiven Materialien notwendigen Einrichtungen.

Zur Erkennung dieser Stoffe werden bereits verschiedenste Verfahren wie z.B. Röntgenanlagen, Tomographen, etc. für eine automatische oder halbautomatische Überprüfung eingesetzt. Normalerweise erfolgt hierbei, vor allem in größeren Flughäfen, zunächst eine automatische Überprüfung aller Gepäckstücke. Gepäckstücke, die bei dieser ersten Überprüfung als kritisch eingestuft werden, werden danach weiteren Überprüfungen unterzogen, die dann z.B. auch eine manuelle Überprüfung durch Öffnung des Gepäckstückes durch Sicherheitspersonal beinhalten können.

Sollte sich erweisen, dass ein Gepäckstück explosives Material enthält, wird dieses Gepäckstück isoliert und z.B. in Sprengkammern oder in Sprengbehälter verbracht und gezielt zerstört.

Aus der Patentliteratur sind schon seit langem Vorrichtungen oder Verfahren bekannt, die dazu beitragen sollen solchen Gefahren vorzubeugen. DE 10 2005 002 756 A1, was als nächstliegender Bekannter Stand der Technik betrachtet wird, zeigt ein kontrollsystem für Gepäckstücke.

Aus der DE 101 25 531 A1 ist eine Inspektionsanlage zur Inspektion von Objekten, insbesondere zur Erkennung von unzulässigen Gegenständen in Reisegepäckstücken, aufweisend Strahlenquellen mit darauf ausgerichteten Detektorzeilen, die um einen Transportschacht angeordnet sind, bekannt, bei der die Strahlenquellen wenigstens drei Strahlen erzeugen, die das Objekt aus wenigstens drei Strahlenebenen betrachten.
Als neu und erfinderisch wird hierbei angesehen, dass die Inspektionsanlage in ein Gehäuse einer separaten Einrichtung oder umgekehrt eingebunden ist und dass zur Verlängerung eines Strahlentunnels die Inspektionsanlage vor dem Transportschacht eine mit dem Transportschacht zusammenwirkende Abschirmung aufweist oder um ein zur separaten Einrichtung gehörendes Anlagenteil angebracht wird ( Anspruch 1 ).
Bei dieser Anlage ist lediglich in diesem speziellen Fall angestrebt den Platzbedarf zu verringern und damit eine verbesserte Möglichkeit zur Nachrüstung zu gewinnen.

Bei dem aus der DE 101 39 672 A1 bekannten Verfahren soll eine verbesserte Prüfung bei der Inspektion eines Objekts, insbesondere eines Gepäckstück, bei dem von einer ortsfesten Strahlenquelle Strahlen abgegeben werden, das Objekt geradlinig durch die Strahlen transportiert wird, und dabei die Intensität der nicht absorbierten Strahlen von einer Detektoranordnung detektiert und in ein Bild des Objekts verarbeitet wird, dadurch erreicht werden, dass nach dem Durchlauf durch die verwendeten Strahlen das Objekt von einer Dreheinrichtung zur Änderung seiner Transportposition um einen Winkel gedreht, anschließend erneut durch die Strahlen transportiert und dabei ein weiteres Bild erzeugt wird ( Anspruch 1 ).

Der Betrag und / oder die Richtung des Drehwinkels werden dabei von einer Bedienperson manuell eingegeben.
Das jeweilige Gepäckstück wird hierbei über eine geradlinig fördernde Transporteinrichtung bewegt. Eine schnelle Transportmöglichkeit unter Umgehung der normalen Förderbänder ist hier nicht möglich.

Aus der DE 11 2004 002 474 T5 ist ferner, beispielhaft für neuere Entwicklungen auf dem Sicherheitssektor, eine Methode zur Detektion von geringen Mengen an speziellen nuklearen Materialien bekannt, die unerlaubterweise in Frachtgut transportiert werden. Solche Substanzen können zum Beispiel für die Herstellung von improvisierten nuklearen Vorrichtungen ( improvised nuclear devices, INDs ) verwendet werden. Zur Begegnung solcher Gefahren laufen derzeit Forschungsprogramme höchster Priorität, die vom US Dept. of Homeland Security, DHS veranlasst sind. Der Transport von Risiko - Gepäck im allgemeinen ist hier nicht angesprochen.

In der DE 11 2004 002 474 T5 sind auch beispielhaft zum Stand der Technik die bisher entwickelten Sicherheits - Screening Methoden und Vorrichtungen dargestellt die die neuesten Entwicklungen und bisher erkannten Gefahrenpotenziale berücksichtigen.
Speziell werden in der DE 11 2004 002 474 T5 hierzu passive Strahlungsüberwachungssysteme ( "Passive radiation - monitoring systems "), und Single - energy Radiographie - Systeme, sowie Dual - energy Radiographie ( DER ) - Systeme angeführt.
Dem hier offenbarten Verfahren liegt die Aufgabe zugrunde, eine Screening - Methode für die effektive Verhinderung von unerlaubtem Transport von SNM's ( speziellen nuklearen Materialien ) an den kritischen Ein - und Ausgangskontrollpunkten durch die Erfassung auch von geringen Mengen an SNM's in Frachtstücken zu ermöglichen
Die hier beschriebene Methode besteht in dem Ausführen von Mehransichts - Mehrenergie - Radiographie durch Bestrahlen eines Objekts mit einer Mehrzahl von diskreten, auf Nuklearreaktionen basierenden Hochenergie - Gammastrahlen bei einer Mehrzahl von verschiedenen Orientierungen, einer Detektion und Aufzeichnung der Strahlung die durch das Objekt verläuft mit mindestens einer Detektoranordnung.

Ferner besteht die hier beschriebene Methode in dem Anzeigen der Präsenz einer Hoch - Z - Substanz durch Detektion eines Unterschieds in einer Transmissions - Dämpfungscharakteristik der Hoch - Z - Substanz im Gegensatz zu Nieder - Z - und Mittel - Z - Substanzen ( Anspruch 1 ).

Aus dem beschriebenen Stand der Technik ist zu ersehen, dass sich die Technik der Detektion gefahrvoller Substanzen ständig neuen Gefahrenpotenzialen anpassen muss.
Dies erfordert den Einsatz neuer Detektionsverfahren und die Neuentwicklung entsprechender Kontrollstationen. Da jedoch neu entwickelte Kontrollstationen den bestehenden Kontrollmöglichkeiten zugeordnet werden müssen und in den Gepäcktransportprozess und Gepäckhandhabungsprozess eingebunden werden müssen, ist es erforderlich für die Erfassung und Weiterleitung von bereits in der Vorprüfung als auffällig erkanntem Gepäck schnellere und effektivere Transport- und Verteilungsmöglichkeiten zu schaffen.

Der erfindungsgemäßen Vorrichtung, bzw. dem entsprechenden Verfahren, liegt deshalb die Aufgabe zugrunde eine Maßnahme zur Detektion, zur Ausschleusung und Neutralisierung von gefährlichem Transportgut vorzustellen, die sich leicht in bestehende Systeme integrieren lässt, einen schnellen und sicheren Transport eines solchen Gefahrenguts ermöglicht, und einen geringen Raumbedarf aufweist.

Die Lösung dieser Aufgabe ermöglichen die Vorrichtungen nach Anspruch 1, bzw. das Verfahren nach 5.

Die erfindungsgemäße Vorrichtung bzw. das zugrunde liegende Verfahren wird über die Figuren 1 bis 4 näher beschrieben.

Es zeigen im Einzelnen:
Fig. 1: einen Lageplan von 2 Kontrollstationen
Fig. 2: den prinzipiellen Aufbau einer Einheit mit 4 Kontrollstationen
Fig. 3: den Aufbau von 2 höherwertigen Kontrollstationen
Fig. 4: eine prinzipielle Darstellung einer speziellen Greifvorrichtung

Die Beförderung von Gepäck über mittlere und größere Entfernungen erfolgt heutzutage sehr oft über den Flugverkehr. In den meisten Flughäfen wird das Fluggepäck nach der Beförderung durch landgebundene Transportfahrzeuge über Förderbänder dem Flugpassagier zugestellt.
Auf dem Weg im Flughafengelände über die entsprechenden Transportsysteme und Förderbänder wird das Fluggepäck auch mehr oder weniger umfangreichen Sicherheitsuntersuchungen unterzogen, wobei entsprechend der gesetzlichen Regelung jedes von einem Passagier am check -In Schalter aufgegebene Gepäckstück überprüft werden muss. Die Sicherheitsüberprüfung bestehet darin, dass das auf einer Transportvorrichtung, meist einem Förderband, seriell transportierte Fluggepäck einzeln einer Kontrolle, meist einer radiologischen Untersuchung, unterzogen wird.
Wird bei dieser Erstkontrolle eines der transportierten Gepäckstücke in irgendeiner Weise als auffällig erkannt, wird es sofort ausgesondert und meist über ein weiteres Förderband einer weiteren, anderen oder genaueren, Kontrolle unterzogen.
Stellt sich bei dieser 2. Kontrolle heraus, dass das betreffende Gepäckstück als ungefährlich einzustufen ist, wird es wieder der normalen Weiterbeförderung zugeleitet. Je nach Sicherheitsanforderungen durchlaufen die Gepäckstücke mehrere solcher Sicherheitskontrollen, wobei die Kontrollen vollautomatisch, halbautomatisch oder manuell durchgeführt werden können.
Auf manchen Flughäfen wird auf diese Art und Weise das gesamte Fluggepäck lediglich von gemeinsam genutzten Anlagen kontrolliert, auf anderen Flughäfen hat jede Fluggesellschaft selbst für eine entsprechende Kontrolle Sorge zu tragen.
Die für den Transport der Gepäckstücke zwischen den einzelnen Kontrollstationen notwendigen Förderanlagen benötigen viel Platz. Hierbei sind nicht nur die linear verlaufenden Förderbänder mit ihren mehr oder weniger breiten Randbegrenzungen für den Personenschutz zu berücksichtigen, sondern auch die zahlreichen Richtungsänderungen. Da mit Rücksicht auf den schonenden Transport der Gepäckstücke großräumige Kurvenradien geplant werden müssen oder Höhenveränderungen nur mit geringen Steigungswinkeln und leichten Gefällstrecken erreicht werden dürfen, ergibt sich ein beachtlicher Flächenbedarf für solche Anlagen. Da normalerweise der überwiegende Teil der Gepäckstücke bereits nach der ersten Sicherheitskontrolle als " sicher" eingestuft wird, durchläuft nur ein geringer Teil der Gepäckstücke die weiteren Kontrollstufen, so dass die Transportanlagen trotz ihres hohen Flächenbedarfs nur wenig genutzt werden. Hinzu kommt dass mit der Länge der Transportwege die mechanische Beanspruchung der untersuchten Gepäckstücke zusätzlich steigt.
Bei der erfindungsgemäßen Vorrichtung, bzw. dem erfindungsgemäßen Verfahren, wird deshalb die Zufuhr und Sortierung, von als auffällig erkanntem Gepäck zu den Kontrollstationen auf engem Raum ausgeführt.

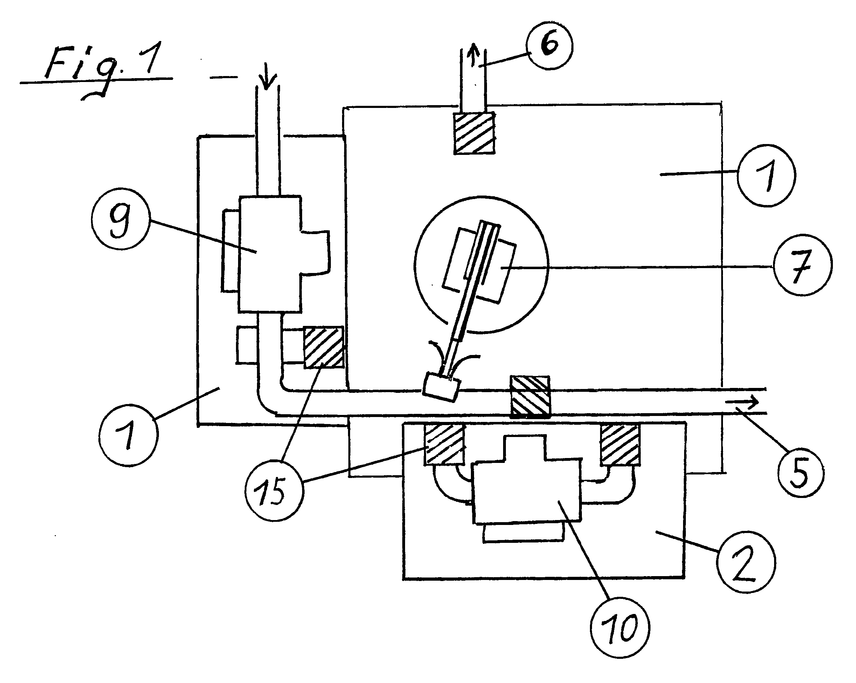

In der Darstellung der Fig. 1 ist zum Beispiel der ersten Einrichtungs - Ebene ( 1 ) die erste Kontrolleinheit ( 9 ) zugeordnet, der sich der Zulauf des zu untersuchenden Gepäckstroms aus der Richtung des Pfeils links oben nähert. Sollte in dieser Kontrolleinheit ( 9 ) ein Gepäckstück als auffällig detektiert worden sein, wird es von einem ersten Roboter ( 7 ) auf kürzestem und schnellstem Weg auf die zweite Ebene ( 2 ) gehoben und der zweiten Kontrolleinheit ( 10 ) zugeführt. Ein solcher Roboter ist in der Regel als ein mehrachsiger Greifroboter mit einer speziellen Greifvorrichtung für Gepäckstücke ausgeführt.
Das unauffällige Normalgepäck wird auf dem gezeigten Weg der Ausschleusung ( 5 ) zugeleitet. Wird ein entsprechendes Gepäckstück in der zweiten Kontrolleinheit ( 10 ) als ungefährlich deklariert, wird es durch den Roboter ( 7 ) der Ausschleusung ( 5 ) zugeführt. Die in der Fig. 1 schraffierten Flächen ( 15 ) kennzeichnen hierbei schematisch die Abstellflächen für die Übergabe der Gepäckstücke die von dem ersten Roboter ( 7 ) weiter befördert werden sollen.
Im Gefahren - Fall wird es von dem ersten Roboter ( 7 ) auf kürzestem und schnellstem Weg zu der Ausschleusung ( 6 ) für Risikogepäck gebracht.
Bei diesem zweistufigen Prozess der Hintereinander - Schaltung von zwei Kontrolleinheiten ( 9,10 ) ist es nicht von Bedeutung ob die erste Ebene ( 1 ) oberhalb oder unterhalb der zweiten Ebene ( 2 ) gelagert ist. Es ist lediglich wichtig, dass der Roboter ( 7 ) freien und ungehinderten Zugriff zu den beiden Ebenen hat.

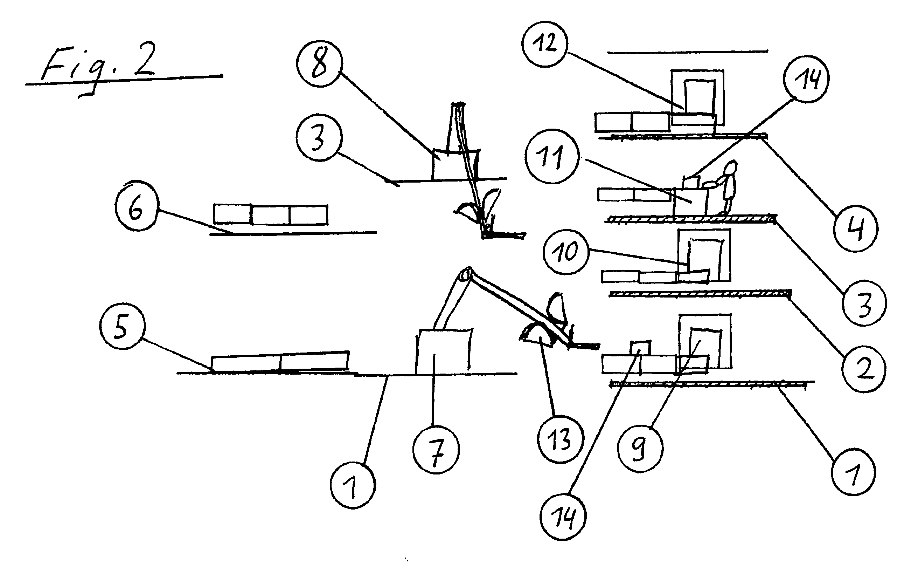

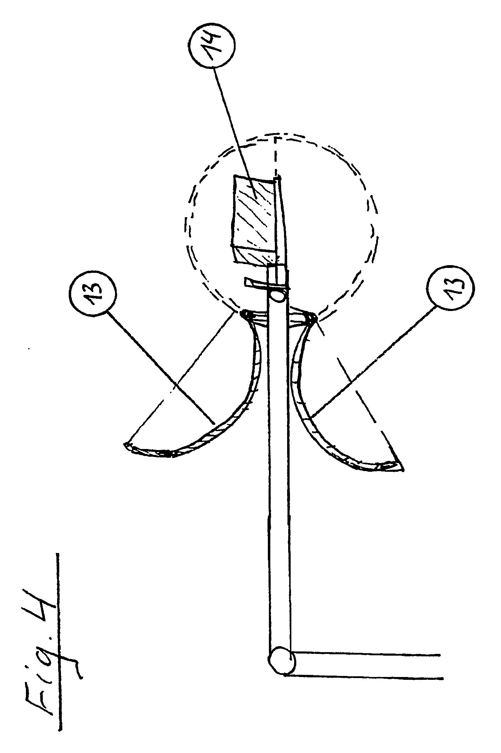

In der Fig.2 ist die erfindungsgemäße Vorrichtung am Beispiel eines vierstufigen Prozesses, der prinzipiell möglichen Hintereinander - Schaltung von vier Kontrolleinheiten ( 9,10,11,12 ), dargestellt.
Hierbei sind auf der rechten Seite vier mögliche Kontrolleinheiten ( 9,10,11,12 ) in den vier Einrichtungs - Ebenen ( 1,2,3,4 ) skizziert. Zur Unterstützung des ersten Roboters ( 7 ) ist für den Zugriff auf die weiteren Einrichtungs - Ebenen ( 11, 12 ) ein weiterer Roboter ( 8 ) mit der im Wesentlichen gleichen Ausstattung wie der Roboter ( 7 ) vorgesehen. Der Roboter ( 8 ) ist hier aus systematischen Gründen auf der dritten Ebene ( 3 ) dargestellt. Es ist jedoch auch bei entsprechender Auslegung möglich, dass ein Roboter auf alle vier Ebenen Zugriff hat, z.B. durch sternförmige Anordnung der Kontrolleinheiten auf zwei Ebenen.
Die dritte Ebene ( 3 ) ist in der Fig. 2 beispielhaft als eine Ebene gezeigt, auf der eine rein manuelle Kontrolle des Gepäcks ( 14 ) erfolgt. Auf der vierten Ebene ( 4 ) ist im gezeigten Beispiel eine Kontrolleinheit mit einer weiteren, hoch auflösenden, Untersuchungsmethode als für diesen dargestellten Prozess letzter Kontrollmöglichkeit gezeigt.
Die Ausschleusung ( 5 ) für Normalgepäck und die Ausschleusung ( 6 ) für Risikogepäck entspricht der Darstellung in der Fig. 1.
Mit ( 13 ) ist in der Fig. 2 ein an den Greifern der beiden Roboter ( 7,8 ) angebrachter und in der Fig. 4 näher beschriebener Emissionsschutz bezeichnet.

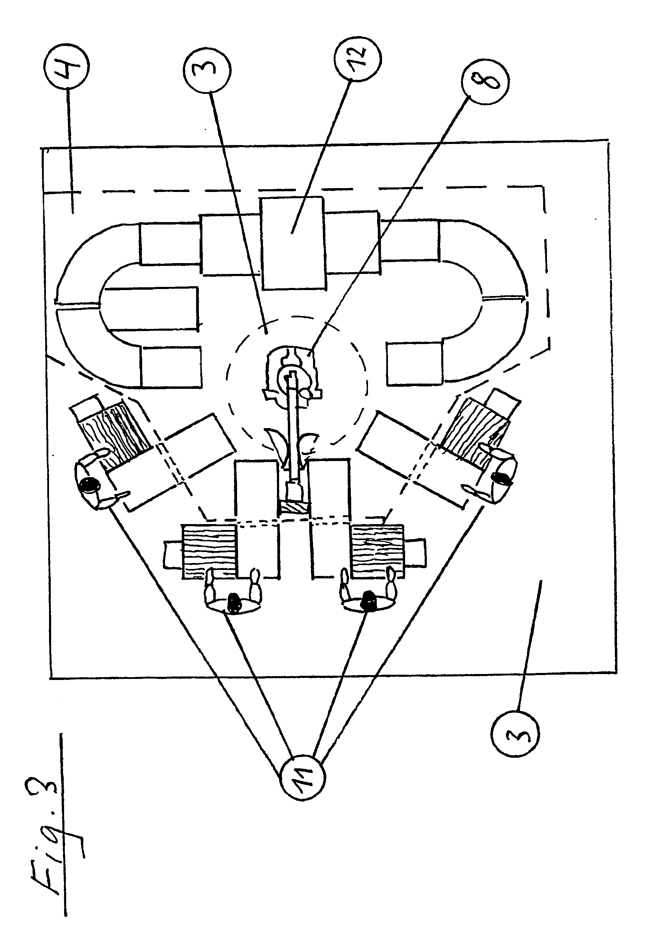

In der Fig.3 ist der Aufbau von 2 höherwertigeren Kontrollstationen dargestellt. Hierbei sind mit ( 11 ) besondere Mitarbeiter an ihrem jeweiligen Arbeitsplatz auf der dritten Ebene ( 3 ) skizziert, die, jeder für sich, eine spezielle Art der Untersuchung, bzw. Kontrolle, an dem jeweiligen, ihnen von einem Roboter gelieferten, Gepäckstück vornehmen können. Jeder dieser Mitarbeiter ist hier in der Lage über den zweiten Roboter ( 8 ) ein Gepäckstück der vierten Kontrolleinheit ( 12 ) auf der vierten Ebene ( 4 ) zuzuführen oder es aus dieser Station zur weiteren Untersuchung an seinen speziellen Arbeitsplatz zu verbringen.
Über den Roboter ( 8 ) ist es ferner möglich ein jeweils zu untersuchendes Gepäckstück ( 14 ) in der vierten Kontrolleinheit ( 12 ) zu drehen oder seine Lage entsprechend einer Eingabetastatur so zu verändern, dass auf der dritten Ebene ( 3 ) der jeweilige Mitarbeiter ( 11 ) auf seinem Bildschirm das zu untersuchende Gepäckstück in der gewünschten Ansicht zu sehen bekommt.
Die vierte Kontrollstation ( 12 ) ist beispielhaft eine Röntgenanlage mit einer erhöhten Auflösung.

Die in der Fig. 4 gezeigte Darstellung einer speziellen Greifvorrichtung betrifft den Fall, dass die Untersuchung eines Gepäckstücks ( 14 ) erwarten lässt, dass von diesem Gepäckstück eine akute Gefahr ausgeht.

Diese Gefahr kann darin bestehen, dass das Gepäckstück ( 14 ) zum Beispiel einen Bestandteil enthält von dem eine gefährliche Strahlung ausgeht, oder dass ein Austrag von gefährlichen Bakterien oder Viren zu befürchten ist.
In diesen oder anderen Fällen einer erkannten akuten Gefährdung von Menschen wird das betreffende Gepäckstück einer sofortigen Zerstörung zum Beispiel in einer Explosionskammer zugeführt.
Für diesen Fall bewährt sich die erfindungsgemäße Vorrichtung besonders, da durch den jeweiligen Roboter gewährleistet ist, dass das erkannte Gefahrengut auf schnellstem Weg, ohne die Hand eines Menschen zu berühren, der ungefährlichen Zerstörung zugeführt wird. Um für solche Fälle sicher zu stellen, dass auch auf dem Weg zur Zerstörung eines solchen gefährlichen Gepäckstücks die mögliche Gefährdung von Menschen reduziert wird, dient der Emissionsschutz ( 13 ). Er besteht im einfachsten Fall aus zwei zusammenklappbaren halbkugelförmigen Schalen aus emissionsresistentem Material, das das jeweilige Gepäckstück ( 14 ) soweit als möglich von der Außenwelt abtrennt. Die beiden Bestandteile des Emissionsschutzes ( 13 ) sind hierbei so an den Greifarm des Roboters angepasst, dass die erforderlichen Greifarbeiten beim Erfassen der Gepäckstücke ( 14 ) nicht beeinträchtigt werden. Das ist zum Beispiel durch entsprechende Aussparungen, bzw. raumfordernde Erweiterungen, in der Oberfläche der gezeigten Kugelhälften möglich.
Für die Abwehr virulenter Bakterien oder Viren genügt hierbei eine flexible gummiartige Oberfläche vorzusehen, wobei lediglich die Verbindungsfläche beider Hälften des Emissionsschutzes ( 13 ) besonders ausgestaltet werden muss.
Zur Zurückhaltung von Strahlungen ist entsprechendes strahlungsabweisendes Material zu verwenden.
Bei dem Auftreten von Explosionen kann wenigstens ein gewisser Splitterschutz gewährleistet werden.
Durch entsprechende adaptive, dem Fachmann bekannte Maßnahmen, können verschiedene, für den jeweiligen Anwendungsfall besonders geeignete, Arten von Emissionsschutzmaßnahmen an der Greifvorrichtung eines Roboters angebracht werden. Dies kann auch automatisch erfolgen, wobei in einem Reservoir unterschiedliche Arten von Emissionsschutz - Vorrichtungen vorrätig sind.

Die Steuerung der im Einsatz befindlichen Roboter wird bevorzugt von einem Mitarbeiter an einem Arbeitsplatz mit manueller Bedienung im Bereich der Kontrolleinheit 3 geleitet, wobei im Falle des Vorhandenseins einer Mehrzahl solcher Arbeitsplätze und 1 oder einer Mehrzahl von Robotern ( 7,8 ) jeder dieser Mitarbeiter die notwendigen Informationen über die Vorhaben und Tätigkeiten der jeweils weiteren, an diesen Steuerungs - Vorgaben beteiligten Mitarbeiter erhalten muss. Die dem Robotersystem zugehörige Kontrolleinheit koordiniert die Bewegung der einzelnen Gepäckstücke und die Abarbeitung der von den Mitarbeitern bewirkten Befehle. An den Arbeitsplätzen der Mitarbeiter sind hierzu Anzeigensysteme vorgesehen, die den Ablaufstatus beim Transport der Gepäckstücke von und zu den Kontrollstationen darstellen.
Ggf. können hier auch Informationen zum Ergebnis der Untersuchung der Gepäckstücke durch die Kontrollstationen dargestellt werden.
Der Aufwand der in der Praxis benötigten Ausstattung richtet sich zum Einen nach dem Aufwand der für notwendig erachteten Kontrollen, bzw. der Anzahl und der Ausstattung der einzelnen Kontrollstationen, und zum Anderen nach der zu erwartenden Anzahl an, als gefährlich einzuschätzenden, Gepäckstücken.

Die interaktive Steuerung der jeweils verwendeten Roboter ( 7,8 ) erfordert ein spezielles Steuerungsprogramm.

### Bezugszeichenliste

- ( 1 ): Einrichtungs - Ebene 1
- ( 2 ): Einrichtungs - Ebene 2
- ( 3 ): Einrichtungs - Ebene 3
- ( 4 ): Einrichtungs - Ebene 4
- ( 5 ): Ausschleusung für Normal -Gepäck
- ( 6 ): Ausschleusung für Risiko - Gepäck
- ( 7 ): Mehrachsen - Roboter 1
- ( 8 ): Mehrachsen - Roboter 2
- ( 9 ): Kontrolleinheit 1
- ( 10 ): Kontrolleinheit 2
- ( 11 ): Kontrolleinheit 3 ( manuell )
- ( 12 ): Kontrolleinheit 4 ( hoch auflösende Darstellung )
- ( 13 ): Emissionsschutz
- ( 14 ): Gepäckstück
- ( 15 ): Übergabeplatz

## Patentansprüche

1. Vorrichtung zum Detektieren und gefahrlosen Neutralisieren von gefährlichen Gütern, insbesondere Gepäckstücken, die aus einer Menge von ungefährlichen Gütern zu selektieren sind, mit einer Folge von Kontrollstationen, wobei mindestens ein mehrachsiger Roboter mit einer gesteuerten Greifvorrichtung vorhanden ist,
**dadurch gekennzeichnet,**
a) **dass** die Kontrollstationen (9, 10, 11, 12) in Kompakt - Bauweise und / oder modulartig aufgebaut sind, ,
b) **dass** ein Roboter (7, 8) Zugriff hat auf vier Ebenen zum Beispiel durch sternförmige Anordnung der Kontrollstationen (9, 10, 11, 12) auf zwei Ebenen,
c) **dass** eine an einem mehrachsigen Roboter ( 7, 8) befestigte Greifvorrichtung einen zuschaltbaren Emissionsschutz (13) für, aus dem jeweiligen Gut austretende, Gefahrenpotenziale aufweist,
d) **dass** verschiedene Arten von Emissionsschutz (13) aus einem zugreifbaren Magazin ausgewählt werden können.

2. Vorrichtung nach Anspruch 1,
**dadurch gekennzeichnet,**
**dass** zwei höherwertige Kontrollstationen existieren, an denen besondere Mitarbeiter (11) auf einer dritten Ebene in die Lage versetzt werden mittels eines Roboters (8) ein zu untersuchendes Gepäckstück (14) zu drehen und am Bildschirm in einer gewünschten Ansicht zu sehen.

3. Vorrichtung nach einem der Ansprüche 1 oder 2,
**dadurch gekennzeichnet,**
**dass** bei einer erkannten akuten Gefährdung von Menschen das betreffende Gepäckstück einer sofortigen Zerstörung, zum Beispiel in einer Explosionskammer, zugeführt wird.

4. Vorrichtung nach einem der Ansprüche 1 bis 3,
**dadurch gekennzeichnet,**
**dass** an den Arbeitsplätzen der Mitarbeiter Anzeigensysteme vorgesehen sind, die den Ablaufstatus beim Transport der Gepäckstücke von und zu den Kontrollstationen (9, 10, 11, 12) darstellen.

5. Verfahren zum Detektieren und gefahrlosen Neutralisieren von gefährlichen Gütern, insbesondere Gepäckstücken, die aus einer Menge von ungefährlichen Gütern zu selektieren sind, wobei die in Folge anfallende Menge von zu untersuchenden Gütern in einer Folge von Kontrollstationen nach Auffälligkeiten untersucht wird und mindestens ein mehrachsiger Roboter mit einer gesteuerten Greifvorrichtung vorhanden ist,
**dadurch gekennzeichnet,**
a) **dass** die Kontrollstationen (9, 10, 11, 12) in Kompakt-Bauweise und / oder modulartig aufgebaut sind,
b) **dass** ein Roboter (7, 8) Zugriff hat auf vier Ebenen zum Beispiel durch sternförmige Anordnung der Kontrollstation (9, 10, 11, 12) auf zwei Ebenen,
c) **dass** eine an einem mehrachsigen Roboter (7, 8) befestigte Greifvorrichtung einen zuschaltbaren Emissionsschutz (13) für aus dem jeweiligen Gut austretende Gefahrenpotenziale aufweist,
d) **dass** verschiedene Arten von Emissionsschutz (13) aus einem Magazin ausgewählt werden können und an einem oder mehreren der vorhandenen Roboter (7, 8) automatisch angebracht werden können.

6. Verfahren nach Anspruch 5,
**dadurch gekennzeichnet,**
**dass** die Kontrollstationen (9, 10, 11, 12) in einer Einrichtungs - Ebene angeordnet sind.

7. Verfahren nach einem der Ansprüche 5 oder 6,
**dadurch gekennzeichnet,**
**dass** die Kontrollstationen (9, 10, 11, 12) in mehreren Einrichtungs -Ebenen (1, 2, 3, 4) angeordnet sind.

8. Verfahren nach einem der Ansprüche 5 bis 7,
**dadurch gekennzeichnet,**
**dass** die Kontrollstationen (9, 10, 11, 12) zum Teil in einer Einrichtungs - Ebene (1) und zum Teil in einer oder mehreren weiteren Einrichtungs - Ebenen angeordnet sind.

9. Verfahren nach einem der Ansprüche 5 bis 8,
**dadurch gekennzeichnet,**
**dass** die Anzahl der eingesetzten Roboter (7, 8) sich nach der Anzahl der Kontrollstationen (9, 10, 11, 12) und / oder nach dem zu erwartenden Anfall an Gepäckstücken (14) richtet.

10. Verfahren nach einem der vorhergehenden Ansprüche 5 bis 9,
**dadurch gekennzeichnet,**
**dass** die Steuerung der eingesetzten Roboter (7, 8) von jeder der optional eingesetzten Kontrollstationen (3) mit manueller Bedienung übernommen werden kann, wobei eine derartige Kontrollstation (3) jeweils alle notwendigen Informationen über die Vorhaben der anderen Kontrollstationen (3) mit manueller Bedienung zur Verfügung hat.

## Claims

1. : Apparatus for detection and safe neutralization of hazardous goods, in particular baggage items, which can be selected from a set of safe goods, having a sequence of monitoring stations, with at least one multi-axis robot with a controlled gripping apparatus being provided,
**characterized**
a) **in that** the monitoring stations (9, 10, 11, 12) are in a compact and/or modular form,
b) **in that** a robot (7, 8), has access to four levels for example by star-shaped arrangement of the monitoring stations (9, 10, 11, 12) on two levels,
c) **in that** a gripping apparatus which is attached to a multi-axis robot (7, 8) has emission protection (13) which can be connected for hazard potentials which originate from the respective item,
d) **in that** various types of emission protection (13) can be selected from an accessible magazine.

2. : Apparatus according to Claim 1,
**characterized in that**
two higher-quality monitoring stations exist, at which special employees (11) at a third level are able to use a robot (8) to rotate a baggage item (14) to be examined, and to see a desired view of it on the screen.

3. : Apparatus according to one of Claims 1 or 2,
**characterized**
**in that**, when an acute hazard to people is found, the relevant baggage item is passed on for immediate destruction, for example in an explosion chamber.

4. : Apparatus according to one of Claims 1 to 3,
**characterized**
**in that** display systems are provided at the employee work stations, which display the sequence status during transport of the baggage items from and to the monitoring stations (9, 10, 11, 12).

5. : Method for detection and safe neutralization of hazardous goods, in particular baggage items, which can be selected from a set of safe goods, with the set of goods to be examined, which arrive in a sequence, being examined for conspicuousness in a sequence of monitoring stations, and with at least one multi-axis robot with a controlled gripping apparatus being provided,
**characterized**
a) **in that** the monitoring stations (9, 10, 11, 12) are in a compact and/or modular form,
b) **in that** a robot (7, 8), has access to four levels for example by star-shaped arrangement of the monitoring stations (9, 10, 11, 12) on two levels,
c) **in that** a gripping apparatus which is attached to a multi-axis robot (7, 8) has emission protection (13) which can be connected for hazard potentials which originate from the respective item,
d) **in that** various types of emission protection (13) can be selected from a magazine, and can be automatically fitted to one or more of the robots (7, 8) which are provided.

6. : Method according to Claim 5,
**characterized**
**in that** the monitoring stations (9, 10, 11, 12) are arranged on a device level.

7. : Method according to one of Claims 5 or 6,
**characterized**
**in that** the monitoring stations (9, 10, 11, 12) are arranged on a plurality of device levels (1, 2, 3, 4).

8. : Method according to one of Claims 5 to 7,
**characterized**
**in that** some of the monitoring stations (9, 10, 11, 12) are arranged on a device level (1), and some are arranged on one or more further device levels.

9. : Method according to one of Claims 5 to 8,
**characterized**
**in that** the number of robots (7, 8) used is governed by the number of monitoring stations (9, 10, 11, 12) and/or by the incidence of baggage items (14) to be expected.

10. : Method according to one of the preceding Claims 5 to 9,
**characterized**
**in that** the control of the robots (7, 8) which are used can be carried out with manual control from any of the optionally used monitoring stations (3), wherein one such monitoring station (3) in each case has all the necessary information available relating to the purposes of the other monitoring stations (3).

## Revendications

1. Dispositif pour détecter et neutraliser sans danger des marchandises dangereuses, notamment des colis, qui doivent être sélectionnées parmi une pluralité de marchandises non dangereuses, comprenant une série de stations de contrôle, au moins un robot multiaxes muni d'un dispositif de préhension commandé étant présent,
**caractérisé en ce**
a) **que** les stations de contrôle (9, 10, 11, 12) sont construites dans un mode de construction compact et/ou sous forme modulaire,
b) **qu'**un robot (7, 8) a accès à quatre plans, par exemple par un arrangement en étoile des stations de contrôle (9, 10, 11, 12) sur deux plans,
c) **qu'**un dispositif de préhension fixé sur un robot multiaxes (7, 8) présente une protection anti-émissions (13) qui peut être mise en service pour les dangers potentiels émanant de la marchandise correspondante,
d) **que** différents types de protections anti-émissions (13) peuvent être choisis à partir d'un chargeur accessible.

2. Dispositif selon la revendication 1, **caractérisé en ce qu'**il existe deux stations de contrôle de niveau supérieur sur lesquelles des opérateurs (11) sur un troisième plan sont notamment mis en situation de pouvoir faire tourner un colis (14) à examiner au moyen d'un robot (8) et de le voir sur un écran dans une vue souhaitée.

3. Dispositif selon l'une des revendications 1 ou 2, **caractérisé en ce qu'**en présence d'une mise en danger sérieuse identifiée des personnes, le colis concerné est soumis à une destruction immédiate, par exemple dans une chambre d'explosion.

4. Dispositif selon l'une des revendications 1 à 3, **caractérisé en ce que** des systèmes d'affichage sont prévus aux postes de travail des opérateurs, lesquels représentent l'état de déroulement lors du transport des colis depuis et vers les stations de contrôle (9, 10, 11, 12).

5. Procédé pour détecter et neutraliser sans danger des marchandises dangereuses, notamment des colis, qui doivent être sélectionnées parmi une pluralité de marchandises non dangereuses, la quantité de marchandises à examiner qui se présentent séquentiellement étant examinées dans une série de stations de contrôle en vue d'y déceler des particularités et au moins un robot multiaxes muni d'un dispositif de préhension commandé étant présent,
**caractérisé en ce**
a) **que** les stations de contrôle (9, 10, 11, 12) sont construites dans un mode de construction compact et/ou sous forme modulaire,
b) **qu'**un robot (7, 8) a accès à quatre plans, par exemple par un arrangement en étoile des stations de contrôle (9, 10, 11, 12) sur deux plans,
c) **qu'**un dispositif de préhension fixé sur un robot multiaxes (7, 8) présente une protection anti-émissions (13) qui peut être mise en service pour les dangers potentiels émanant de la marchandise correspondante,
d) **que** différents types de protections anti-émissions (13) peuvent être choisis à partir d'un chargeur et peuvent être montés automatiquement sur un ou plusieurs des robots (7, 8) présents.

6. Procédé selon la revendication 5, **caractérisé en ce que** les stations de contrôle (9, 10, 11, 12) sont disposées dans un plan d'opération.

7. Procédé selon l'une des revendications 5 ou 6, **caractérisé en ce que** les stations de contrôle (9, 10, 11, 12) sont disposées dans plusieurs plans d'opération (1, 2, 3, 4).

8. Procédé selon l'une des revendications 5 à 7, **caractérisé en ce que** les stations de contrôle (9, 10, 11, 12) sont disposées en partie dans un plan d'opération (1) et en partie dans un ou plusieurs plans d'opération supplémentaires.

9. Procédé selon l'une des revendications 5 à 8, **caractérisé en ce que** le nombre de robots (7, 8) utilisés est déterminé en fonction du nombre de stations de contrôle (9, 10, 11, 12) et/ou en fonction de la cadence attendue de colis (14).

10. Procédé selon l'une des revendications précédentes 5 à 9, **caractérisé en ce que** la commande des robots (7, 8) utilisés peut être prise en charge par chacune des stations de contrôle (3) à commande manuelle utilisées en option, une station de contrôle (3) de ce type disposant à chaque fois de toutes les informations nécessaires sur les desseins des autres stations de contrôle (3) à commande manuelle.
